# EUROPEAN PATENT SPECIFICATION

(11) **EP 2 536 205 B1**
(45) Date of publication and mention of the grant of the patent: **08.01.2020**
(21) Application number: 11803075.8
(22) Date of filing: 28.02.2011
(51) Int. Cl.: H04W 72/04, H04W 28/16, H04W 88/10, H04W 48/18, H04W 24/08, H04W 8/26

(54) **METHOD AND SYSTEM FOR RESOURCE MANAGEMENT BASED ON RADIO NETWORK SHARING**
VERFAHREN UND SYSTEM FÜR RESSOURCENMANAGEMENT AUF BASIS GEMEINSAM GENUTZTER FUNKNETZWERKE
PROCÉDÉ ET SYSTÈME DE GESTION DE RESSOURCES SUR LA BASE D'UN PARTAGE DE RÉSEAU RADIO

(30) Priority: 06.07.2010 CN 201010226234
(43) Date of publication of application: 19.12.2012
(73) Proprietor: ZTE Corporation, Shenzhen, Guangdong 518057 (CN)
(72) Inventor: QIE, Xiaodan, Shenzhen Guangdong 518057 (CN); ZHANG, Xianzhou, Shenzhen Guangdong 518057 (CN)
(74) Representative: Lavoix
(86) International application number: PCT/CN2011/071378
(87) International publication number: WO 2012/003721

(56) References cited:
- CN-A- 1 744 761
- CN-A- 101 001 184
- CN-A- 101 060 698
- GB-A- 2 442 514
- NOKIA SIEMENS NETWORKS: "Update on Security, System Information, Mobility, MBMS and DRX", 3GPP DRAFT; R2-073855 STAGE 2 UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070903, 3 September 2007 (2007-09-03), XP050136502, [retrieved on 2007-09-03]
- "3rd Generation Partnership Project; Technical Specification Group Services and System Aspects; Network Sharing; Architecture and functional description (Release 9)", 3GPP STANDARD; 3GPP TS 23.251, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 25 March 2010 (2010-03-25), pages 1-20, XP050402060, [retrieved on 2010-03-25]
- "3rd Generation Partnership Project; Technical Specification Group Radio Access Network; Evolved Universal Terrestrial Radio Access (E-UTRA); Layer 2 - Measurements (Release 9)", 3GPP STANDARD; 3GPP TS 36.314, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 17 June 2010 (2010-06-17), pages 1-17, XP050441908, [retrieved on 2010-06-17]
- NEC: "RAN sharing: use of subscriber PLMN id", 3GPP DRAFT; R3-071429-RAN SHARING USE OF SUBSCRIBER PLMN ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162257, [retrieved on 2007-08-15]

## Description

### TECHNICAL FIELD

The disclosure relates to the field of radio communication technologies, in particular to a method and a system for resource management based on network sharing.

### BACKGROUND

Network sharing refers to the implementation of sharing a radio network among different providers, that is, the implementation of multiple providers sharing a base station, so as to effectively reduce the investment on network establishment. Since network sharing greatly reduces the cost of network construction and the investment of network operation and maintenance, network sharing has received the attention of more and more providers; and many providers expect to save the early-stage network construction investment through network sharing so as to accelerate the launch speed of a network.

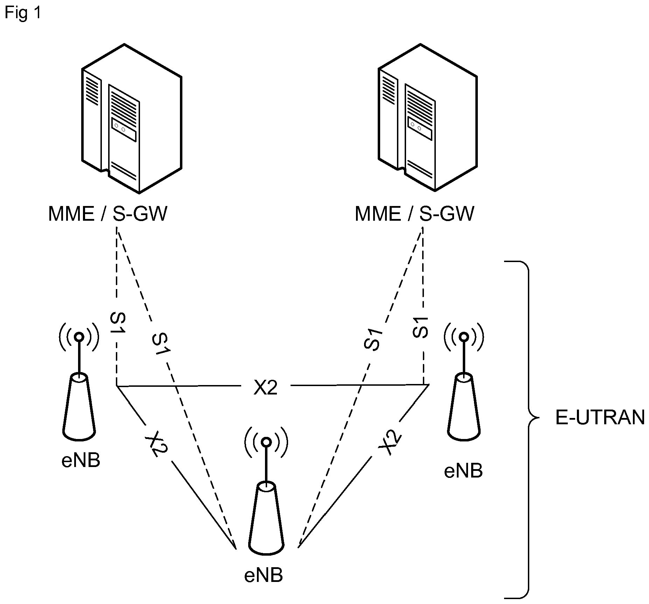

The network architecture of a Long Term Evolution (LTE) mobile communication system is as shown in Fig. 1, mainly including a core network (CN) and an Evolved Universal Terrestrial Radio Access Network (E-UTRAN), wherein the CN mainly includes Mobility Management Entities (MMEs) and Serving-Gateways (S-GWs); the E-UTRAN mainly includes evolved NodeBs (eNBs); wherein the CN and the E-UTRAN are interconnected and intercommunicated via an S1 interface; different eNBs inside the E-UTRAN are interconnected and intercommunicated via an X2 interface. In the condition of network sharing, when a capacity expansion is needed as network capacity is increased, a provider either can choose smooth transition from a radio communication network to its own independent network, or can further expand the cooperation.

However, the sharing of network resources might cause such a phenomenon that the provider registered when a User Equipment (UE) enters a network is inconsistent with the provider to which the network resource actually used by the UE when it initiates a service belongs (that is, the provider registered when the UE is powered on), this is because in the condition of network sharing, when the available resource of the provider registered when the UE enters the network could not meet the service request of the UE and when the UE detects a shared resource, the UE would register itself to the provider to which the shared resource above belongs, thus inconsistency is caused between the provider registered when the UE enters the network and the one registered when the UE is powered on. However, in the prior art, only the provider identification information registered when the UE is powered on can be acquired by the core network or eNB, but the eNB cannot acquire the provider identification registered when the UE entered the network. Thus, if the condition that the two provider identifications are inconsistent appears, the eNB can not provide a resource management service with a provider as a granularity accurately and reliably.

NOKIA SIEMENS NETWORKS, "Update on Security, System Information, Mobility, MBMS and DRX", 3GPP DRAFT; R2-073855 STAGE 2 UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20070903), vol. RAN WG2, no. Athens, Greece; 20070903, discloses radio access network sharing supported by E-UTRAN and radio resource management.

"3rd Generation Partnership Project; Technical Specification Group Services and System Aspects; Network Sharing; Architecture and functional description (Release 9)", 3GPP STANDARD; 3GPP TS 23.251, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20100325), no. V9.2.0, pages 1 - 20, discloses how several core network operators can share one radio access network and details the impacts on the network architecture.

3rd Generation Partnership Project; Technical Specification Group Radio Access Network; Evolved Universal Terrestrial Radio Access (E-UTRA); Layer 2 - Measurements (Release 9)", 3GPP STANDARD; 3GPP TS 36.314, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discloses the description and definition of the measurements performed by E-UTRAN that are transferred over the standardised interfaces in order to support E-UTRA radio link operations, radio resource management (RRM), network operations and maintenance (OAM), and self-organising networks (SON).

NEC, "RAN sharing: use of subscriber PLMN id", 3GPP DRAFT; R3-071429-RAN SHARING USE OF SUBSCRIBER PLMN ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20070815), vol. RAN WG3, no. Athens, Greece; 20070815, pointed out the need for the eNB to know the network the UE is subscribed to in order to control the Inter-RAT mobility in case e.g. an Inter-RAT Handover from a shared e-UTRAN to a non shared RAN is triggered.

GB 2 442 514 A discloses a method of reducing the size of an initial uplink message sent between a mobile terminal and a network element of a mobile communications network.

### SUMMARY

In view of the problem above, the main object of the disclosure is to provide a method and a system for resource management based on network sharing, through which an eNB collects accurate resource statistics with each provider as a separate group and performs services such as resource management according to the statistics result.

The features of the method and system according to the present invention are defined in the independent claims, and the preferable features according to the present invention are defined in the dependent claims.

Through the provider identification information, transmitted by the core network and registered when the UE enters the network, and reported by the UE via an eNB, the method and the system provided by the disclosure for resource management based on network sharing can acquire the provider identification information registered when the UE enters the network, collect statistics of resources, which UEs need to occupy, of each provider with each provider as a separate group , avoid inaccurate statistics of resources, which UEs need to occupy, of each provider caused by inconsistency between the provider registered when the UE enters the network and the one registered when the UE is powered on, and thereby providing accurate services such as resource management for each provider, ensuring benefits for each provider, and improving core competitive capability of each provider according to the statistic result.

### BRIEF DESCRIPTION OF THE DRAWINGS

Fig. 1 shows a network architecture diagram of an LTE mobile communication system;
Fig. 2 shows a flow diagram of Embodiment 1 of a method for implementing resource management based on network sharing in the disclosure;
Fig. 3 shows a structure diagram of a system applying the method shown in Fig. 2 in the disclosure;
Fig. 4 shows a flow diagram of Embodiment 2 of a method for implementing resource management based on network sharing in the disclosure;
Fig. 5 shows a structure diagram of a system applying the method shown in Fig. 4 in the disclosure.

### DETAILED DESCRIPTION

The basic idea of the disclosure is: in the condition of network sharing, an eNB acquires the provider information registered when a UE enters a network, thus collecting statistics of resources, which UEs need to occupy, of each provider with each provider as a separate group, avoiding inexact statistics of resources, which UEs need to occupy, of each provider caused by inconsistency between the provider registered when the UE enters the network and the one registered when the UE is powered on.

It should be noted that the provider registered when a UE enters a network is first selected and determined by a user. For example, a user can select a SIM card of providers such as China Mobile and China Unicom to apply to a UE; at this moment, the provider to which the SIM card belongs is the provider registered when the UE enters the network.

For a better understanding of the purpose, the technical solution and the advantages of the disclosure, embodiments are provided below to illustrate the disclosure in detail by reference to accompanying drawings.

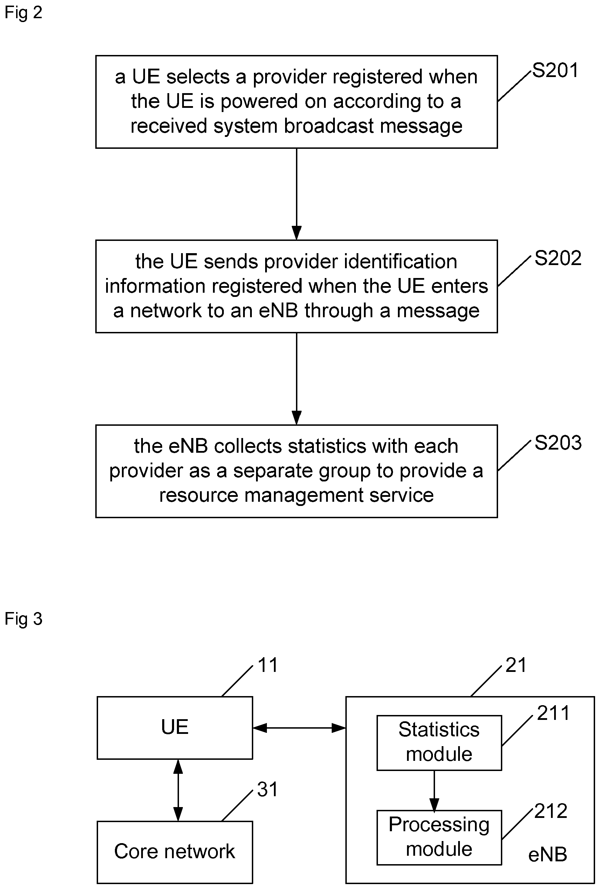

Fig. 2 shows a flowchart of Embodiment 1 of a method for resource management based on network sharing; as shown in Fig. 2, the method includes the following steps:
Step 201: a UE receives and resolves a system broadcast message sent by an eNB, and selects a provider registered when the UE is powered on.

In Step 201, the eNB sends a system broadcast message periodically according to a preset time interval, wherein the sent system broadcast message includes a provider identification list of shared providers of the eNB, network resource utilization ratio of each of the shared providers and so on.

In Step 201, the UE selects the provider registered when the UE initiates service, that is, the provider registered when the UE is powered on, according to the network resource utilization ratio of each of the shared providers obtained by resolving the system broadcast message and according to the stored provider identification information registered when the UE is powered on, and meanwhile the UE updates the stored provider identification information registered when the UE is powered on, and then the UE can send service request information to the provider registered when the is UE is powered on. Due to the influences of the network resource utilization ratio of each provider and the provider identification information registered when the UE is powered on last time, an inconsistency might be caused between the provider registered when the UE is powered on and the one registered when the UE enters a network.

Step 202: the UE sends the provider identification information registered when the UE enters a network to the eNB.

In Step 202, the UE can report the provider identification information registered when the UE enters the network to the eNB through an existing message in a signaling process, or it can report the provider identification information registered when the UE enters the network to the eNB through a new message. When the UE reports the provider identification information registered when the UE enters the network through an existing message in a signaling process, specifically, the UE can report the provider identification information registered when the UE enters the network to the eNB by adding a provider identification cell registered when the UE enters the network to an RRC establishment request message in an air interface signaling process during the process of establishing an air interface connection with the eNB; also the UE can report the provider identification information registered when the UE enters the network to the eNB by adding a provider identification cell registered when the UE enters the network to an RRC establishment complete message in an air interface signaling process.

Step 203: the eNB collects statistics with each provider as a separate group and provides a resource management service.

Specifically, the eNB collects, with each provider as a separate group, statistics of resources, which UEs need to occupy, of each provider in real time according to the received provider identification information registered when the UE enters the network, and thereby providing services for each provider according to the statistic results. For example, according to the statistics of resources, which UEs need to occupy, of each provider, the eNB adjusts the bandwidth of a subscribed network resource of each provider, or divides out part of resources as a shared resource from the network resource of the provider with smaller resource utilization ratio, for the convenience of the eNB to perform resource optimization management, thereby maximally utilizing network resources and providing better service for each provider.

In addition, after the eNB receives the service request information sent by the UE to the provider registered when the UE is powered on, the eNB determines whether the provider identification information registered when the UE enters the network is consistent with the provider identification information registered when the UE is powered on, if not, the eNB allocates a network resource for the service of the UE only in the condition that the network resource of the current provider registered when the UE is powered on is sufficient, otherwise, the eNB first meets the service request of the UE with the provider identification information registered when the UE enters the network consistent with the provider identification information registered when the UE is powered on. In the meantime, no matter whether the provider identification information registered when the UE enters the network is consistent with the provider identification information registered when the UE is powered on, the eNB would update the resources, which UEs need to occupy, of the provider registered when the UE enters the network, according to the resource needed by a service initiated by the UE.

In Step 203, the eNB also can provide a service for each provider periodically according to the statistics results based on a preset time interval.

Hereinafter, a system adopting the method shown in Fig. 2 is illustrated in conjunction with Fig. 3; as shown in Fig. 3, the system comprises at least one UE 11, an eNB 21 and a core network 31, wherein the UE 11 is configured to send provider identification information registered when the UE enters a network to the eNB 21; the eNB 21 is configured, according to the received provider identification information registered when the UE enters the network, to collect, with each provider as a separate group , statistics of resources occupied by UEs of each provider so as to perform services such as resource management.

The UE 11 is further configured to receive a system broadcast message sent by the eNB 21, wherein the system broadcast message contains a provider identification list of shared providers of the eNB 21, network resource utilization ratio of each of the shared providers and so on. The UE 11 selects a provider registered when the UE is powered on from the provider list, according to the network resource utilization ratio of each of the shared providers obtained by resolving the system broadcast message and according to the provider identification information registered when the UE is powered on last time, wherein due to the influences of the network resource utilization ratio of each provider and the provider identification information registered when the UE is powered on last time, an inconsistency might be caused between the provider registered when the UE is powered on and the one registered when the UE enters the network. The UE 11 specifically is configured to report the provider identification information registered when the UE enters the network to the eNB 21 through an existing message in a signaling process or through a new message. When the UE reports the provider identification information registered when the UE enters the network through an existing message in a signaling process, specifically, the UE can report the provider identification information registered when the UE enters the network to the eNB 21 by adding a provider identification cell registered when the UE enters the network to an RRC establishment request message or an RRC establishment complete message in an air interface signaling process.

The eNB 21 is specifically configured to receive the provider identification information registered when the UE enters the network reported by the UE 11, and according to the provider identification information registered when the UE enters the network, to collect statistics of resources, which UEs need to occupy, of each provider with each provider as a separate group in real time; further, the eNB 21 also can provide services such as resource management for each provider periodically according to the statistics results based on a preset time interval, for example, according to the statistics of resources, which UEs need to occupy, of each provider, the eNB 21 adjusts the bandwidth of a subscribed network resource of each provider, or divides out part of resources as a shared resource from the network resource of the provider with smaller resource utilization ratio, for the convenience of the eNB 21 to perform resource optimization management, thereby maximally utilizing network resources and providing better service for each provider.

Preferably, the eNB 21 can further include a statistics module 211 and a processing module 212, wherein the statistics module 211 is configured, according to the provider identification information registered when the UE enters the network, to collect statistics of resources, which UEs need to occupy, of each provider with each provider as a separate group in real time and to send the statistics results to the processing module 212 periodically; the processing module 212 is configured to provide services such as resource management for each provider according to the statistics results of the statistics module 211. It should be understood that the statistics module 211 and the processing module 212 above can be a software unit, a hardware unit or a software-hardware combined unit embedded in the eNB 21.

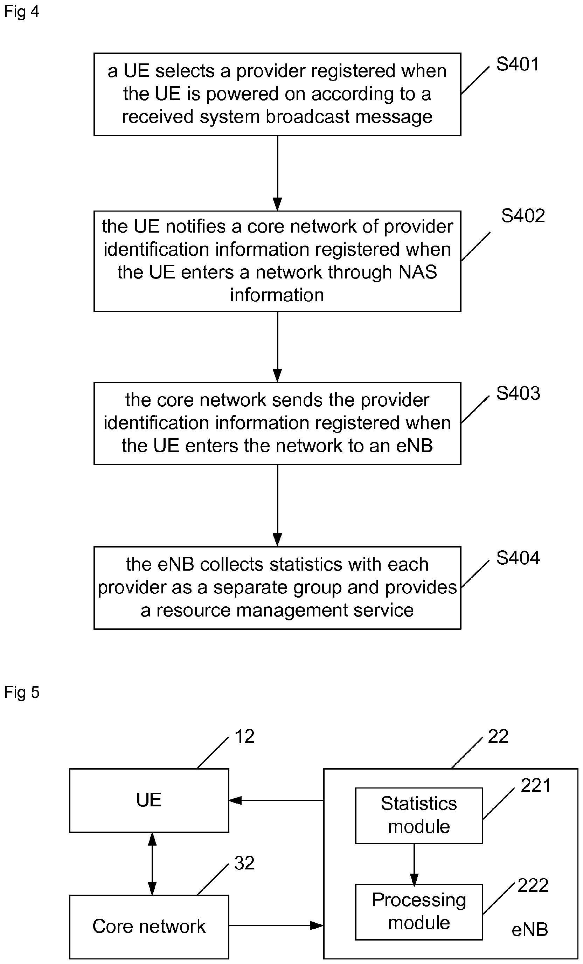

Fig. 4 shows a flow diagram of Embodiment 2 of resource management based on network sharing; as shown in Fig. 4, the method includes the following steps:
Step 401: a UE receives and resolves a system broadcast message sent by an eNB, and selects a provider registered when the UE is powered on.

In Step 401, the eNB sends a system broadcast message periodically according to a preset time interval, wherein the sent system broadcast message includes a provider identification list of shared providers of the eNB, network resource utilization ratio of each of the shared providers and so on.

In Step 401, the UE selects the provider registered when the UE initiates a service this time, that is, the provider registered when the UE is powered on, according to the network resource utilization ratio of each of the shared providers obtained by resolving the system broadcast message and according to the stored provider identification information registered when the UE is powered on, and meanwhile the UE updates the stored provider identification information registered when the UE is powered on, and then the UE can send service request information to the provider registered when the is UE is powered on. Due to the influences of the network resource utilization ratio of each provider and the provider identification information registered when the UE is powered on last time, an inconsistency might be caused between the provider registered when the UE is powered on and the one registered when the UE enters the network.

Step 402: the UE establishes a connection with a core network; during this process, the UE would notify the core network of the provider identification information registered when the UE enters the network through NAS information.

Step 403: the core network sends the received provider identification information registered when the UE enters the network to the eNB.

In Step 403, the UE can send the provider identification information registered when the UE enters the network to the eNB through an existing message in a signaling process, or can send the provider identification information registered when the UE enters the network to the eNB through a new message. When the UE sends the provider identification information registered when the UE enters the network through an existing message in a signaling process, specifically, the UE can send the provider identification information registered when the UE enters the network to the eNB by adding a provider identification cell registered when the UE enters the network by an initial UE context request message.

Step 404: the eNB collects statistics with each provider as a separate group and provides a resource management service.

Specifically, the eNB collects, with each provider as a separate group , statistics of resources, which UEs need to occupy, of each provider in real time according to the received provider identification information registered when the UE enters the network, and thereby providing services for each provider according to the statistic results, for example, according to the statistics of resources, which UEs need to occupy, of each provider, the eNB adjusts the bandwidth of a subscribed network resource of each provider, or divides out part of resources as a shared resource from the network resource of the provider with smaller resource utilization ratio, for the convenience of the eNB to perform resource optimization management, thereby maximally utilizing network resources and providing better service for each provider.

In addition, after the eNB receives the service request information sent by the UE to the provider registered when the UE is powered on, the eNB determines whether the provider identification information registered when the UE enters the network is consistent with the provider identification information registered when the UE is powered on, if not, the eNB allocates a network resource for the service of the UE only in the condition that the network resource of the current provider registered when the UE is powered on is sufficient, otherwise, the eNB first meets the service request of the UE with the provider identification information registered when the UE enters the network consistent with the provider identification information registered when the UE is powered on. In the meantime, no matter whether the provider identification information registered when the UE enters the network is consistent with the provider identification information registered when the UE is powered on, the eNB would update the resources, which UEs need to occupy, of the provider registered when the UE enters the network, according to the resource needed by a service initiated by the UE.

In Step 404, the eNB also can provide a service for each provider periodically according to the statistics results based on a preset time interval.

Hereinafter, a system adopting the method shown in Fig. 4 is illustrated in conjunction with Fig. 5; as shown in Fig. 5, the system includes at least one UE 12, an eNB 22 and a core network 32, wherein the UE 12 is configured to establish a connection with the core network 32 and to notify the core network 32 of the provider identification information registered when the UE enters the network through NAS information; the core network 32 is configured to send the provider identification information registered when the UE enters the network received from the UE 12 to the eNB 22; the eNB 22 is configured, according to the provider identification information registered when the UE enters the network received from the core network 32, to collect, with each provider as a separate group , statistics of resources, which UEs need to occupy, of each provider so as to perform services such as resource management.

The UE 12 is further configured to receive a system broadcast message sent by the eNB 22, wherein the system broadcast message contains a provider identification list of shared providers of the eNB 22, network resource utilization ratio of each of the shared providers and so on. The UE 12 selects a provider registered when the UE is powered on from the provider list, according to the network resource utilization ratio of each of the shared providers obtained by resolving the system broadcast message and according to the provider identification information registered when the UE 12 is powered on last time, wherein due to the influences of the network resource utilization ratio of each provider and the provider identification information registered when the UE is powered on last time, an inconsistency might be caused between the provider registered when the UE is powered on and the one registered when the UE enters the network.

The core network 32 is specifically configured to receive the provider identification information registered when the UE enters the network sent from the UE 12 and further to send the received provider identification information registered when the UE enters the network to the eNB 22 through an existing message in a signaling process; specifically, the core network 32 can send the provider identification information registered when the UE enters the network to the eNB 22 by adding a provider identification cell registered when the UE enters the network by an initial UE context request message.

The eNB 22 is specifically configured to receive the provider identification information registered when the UE enters the network sent by the core network 32, and to collect statistics of resources, which UEs need to occupy, of each provider with each provider as a separate group in real time according to the provider identification information registered when the UE enters the network; further, the eNB 22 also can be configured to provide services such as resource management for each provider periodically according to the statistics results based on a preset time interval, for example, according to the statistics of resources, which UEs need to occupy, of each provider, the eNB 22 adjusts the bandwidth of a subscribed network resource of each provider, or divides out part of resources as a shared resource from the network resource of the provider with smaller resource utilization ratio, for the convenience of the eNB to perform resource optimization management, thereby maximally utilizing network resources and providing better service for each provider.

Preferably, the eNB 22 may further include a statistics module 221 and a processing module 222, wherein the statistics module 221 is configured, according to the provider identification information registered when the UE enters the network, to collect statistics of resources, which UEs need to occupy, of each provider with each provider as a separate group in real time and to send the statistics results to the processing module 222 periodically; the processing module 222 is configured to provide services such as resource management for each provider according to the statistics results of the statistics module 221. It should be understood that the statistics module 221 and the processing module 222 above can be a software unit, a hardware unit or a software-hardware combined unit embedded in the eNB 22.

By receiving the provider identification information reported by the UE or sent by a core network by the eNB, the disclosure acquires information of the provider to which the UE belongs, collects statistics of resources, which UEs need to occupy, of each provider with each provider as a separate group, avoids inexact statistics of resources, which UEs need to occupy, of each provider caused by inconsistency between the provider registered when the UE enters the network and the one registered when the UE is powered on, and thereby providing services such as resource management for each provider according to the statistic result, thus ensuring the benefit of each provider and improving core competitive capability of each provider.

By receiving, by the eNB, the provider identification information registered when the UE enters the network reported by the UE or sent by the core network, the system provided by the disclosure for resource management based on network sharing avoids inexact statistics of resources, which UEs need to occupy, of each provider, which is caused by inconsistency between the provider registered when the UE enters the network and the one registered when the UE is powered on, and provides better services such as resource management for each provider.

The above is the preferred embodiment of the disclosure only and is not intended to limit the protection scope of the disclosure.

## Claims

1. A method for resource management based on radio network sharing, where multiple providers share a base station, the method comprises:
acquiring, by an evolved NodeB, eNB, provider identification information registered when a User Equipment, UE, enters a network;
collecting (S203), by the eNB, statistics of resources occupied by UEs of respective providers according to the provider identification information registered when the UE enters the network, so as to perform resource management,
wherein performing resource management comprises:
after the eNB receives a service request information sent by the UE to a provider registered when the UE is powered on, determining, by the eNB, whether the provider identification information registered when the UE enters the network is consistent with provider identification information registered when the UE is powered on;
if not, allocating, by the eNB, a network resource for the service of the UE only in the condition that the network resource of the provider registered when the UE is powered on is sufficient,
wherein the step of acquiring, by the eNB, the provider identification information registered when the UE enters the network comprises:
transmitting (S202), by the UE, the provider identification information registered when the UE enters the network to the eNB.

2. A method for resource management based on radio network sharing, where multiple providers share a base station, the method comprises:
acquiring, by an evolved NodeB, eNB, provider identification information registered when a User Equipment, UE, enters a network;
collecting (S203), by the eNB, statistics of resources occupied by UEs of respective providers according to the provider identification information registered when the UE enters the network, so as to perform resource management,
wherein performing resource management comprises:
after the eNB receives a service request information sent by the UE to a provider registered when the UE is powered on, determining, by the eNB, whether the provider identification information registered when the UE enters the network is consistent with provider identification information registered when the UE is powered on;
if not, allocating, by the eNB, a network resource for the service of the UE only in the condition that the network resource of the provider registered when the UE is powered on is sufficient,
wherein the step of acquiring, by the eNB, the provider identification information registered when the UE enters the network comprises:
establishing, by the UE, a connection with a core network, and notifying (S402) the core network of the provider identification information registered when the UE enters the network through Non-Access Statum, NAS, information; transmitting (S403), by the core network, the received provider identification information registered when the UE enters the network to the eNB.

3. The method according to claim 1, wherein the step of transmitting, by the UE, the provider identification information registered when the UE enters the network to the eNB comprises:
reporting, by the UE, the provider identification information registered when the UE enters the network, to the eNB through one of the following messages in an air interface signaling process: a Radio Resource Control, RRC, establishment request message and an RRC establishment complete message.

4. The method according to claim 2, wherein the step of transmitting, by the core network, the received provider identification information registered when the UE enters the network to the eNB comprises:
transmitting, by the core network, the provider identification information registered when the UE enters the network, to the eNB through an initial UE context request message.

5. A system for resource management based on radio network sharing, where multiple providers share a base station, the system comprises: a User Equipment, UE, (11) and an evolved NodeB, eNB, (21), wherein
the UE (11) is configured to transmit provider identification information registered when the UE enters a network to the eNB (21);
the eNB (21) is configured to acquire the provider identification information registered when the UE (11) enters the network, and collect statistics of resources occupied by UEs of respective providers according to the provider identification information registered when the UE (11) enters the network, so as to perform resource management,
wherein the eNB (21) is configured to: after the eNB receives a service request information sent by the UE to a provider registered when the UE is powered on, determine whether the provider identification information registered when the UE enters the network is consistent with provider identification information registered when the UE is powered on; if not, allocate a network resource for the service of the UE only in the condition that the network resource of the provider registered when the UE is powered on is sufficient,
wherein the UE (11) is configured to report the provider identification information registered when the UE (11) enters the network to the eNB (21) directly.

6. The system according to claim 5, wherein the UE (11) is configured to report the provider identification information registered when the UE (11) enters the network to the eNB (21) through one of the following messages in an air interface signaling process: an Radio Resource Control, RRC, establishment request message and an RRC establishment complete message.

7. A system for resource management based on radio network sharing, where multiple providers share a base station, the system comprises: a User Equipment, UE, (11) and an evolved NodeB, eNB, (21), wherein
the UE (11) is configured to transmit provider identification information registered when the UE enters a network to the eNB (21);
the eNB (21) is configured to acquire the provider identification information registered when the UE (11) enters the network, and collect statistics of resources occupied by UEs of respective providers according to the provider identification information registered when the UE (11) enters the network, so as to perform resource management,
wherein the eNB (21) is configured to: after the eNB receives a service request information sent by the UE to a provider registered when the UE is powered on, determine whether the provider identification information registered when the UE enters the network is consistent with provider identification information registered when the UE is powered on; if not, allocate a network resource for the service of the UE only in the condition that the network resource of the provider registered when the UE is powered on is sufficient,
wherein the system further comprises a core network (32);
the UE (11, 12) is configured to establish a connection with the core network (32) and notify the core network (32) of the provider identification information registered when the UE (11, 12) enters the network through Non-Access Statum, NAS, information;
the core network (32) is configured to transmit the provider identification information registered when the UE (11, 12) enters the network to the eNB (21, 22).

8. The system according to claim 7, wherein the core network (32) is configured to transmit the provider identification information registered when the UE (11, 12) enters the network to the eNB (21, 22) through an initial UE context request message.

9. The system according to any one of claims 5 to 8, wherein the eNB (21, 22) further comprises a statistics module (211, 221) and a processing module (212, 222), wherein
the statistics module (211, 221) is configured to collect statistics of resources occupied by UEs of respective providers according to the provider identification information registered when the UE enters the network, and transmit the statistics results periodically; and
the processing module (212, 222) is configured to perform resource management according to the statistics results.

## Patentansprüche

1. Verfahren zur Ressourcenverwaltung basierend auf gemeinsamer Funknetznutzung, wobei mehrere Anbieter eine Basisstation gemeinsam nutzen, wobei das Verfahren Folgendes umfasst:
Erfassen von Anbieteridentifizierungsinformationen, die registriert werden, wenn eine Benutzerausrüstung, UE, in ein Netz eintritt, durch einen evolved NodeB, eNB,
Sammeln (S203) von Statistiken von Ressourcen, die durch UEs besetzt sind, von entsprechenden Anbietern durch den eNB gemäß den Anbieteridentifizierungsinformationen, die registriert werden, wenn die UE in das Netz eintritt, um eine Ressourcenverwaltung auszuführen,
wobei das Ausführen der Ressourcenverwaltung Folgendes umfasst:
nachdem der eNB eine Dienstanfrageinformation empfängt, die durch die UE an einen Anbieter gesendet wird, der registriert wird, wenn die UE eingeschaltet wird, Bestimmen durch den eNB, ob die Anbieteridentifizierungsinformationen, die registriert werden, wenn die UE in das Netz eintritt, mit Anbieteridentifizierungsinformationen übereinstimmen, die registriert werden, wenn die UE eingeschaltet wird,
wenn nicht, Zuweisen einer Netzressource für den Dienst der UE durch den eNB nur unter der Bedingung, dass die Netzressource des Anbieters, der registriert wird, wenn die UE eingeschaltet wird, ausreichend ist,
wobei der Schritt des Erfassens der Anbieteridentifizierungsinformationen, die registriert werden, wenn die UE in das Netz eintritt, durch den eNB Folgendes umfasst:
Übermitteln (S202) der Anbieteridentifizierungsinformationen, die registriert werden, wenn die UE in das Netz eintritt, an den eNB durch die UE.

2. Verfahren zur Ressourcenverwaltung basierend auf gemeinsamer Funknetznutzung, wobei mehrere Anbieter eine Basisstation gemeinsam nutzen, wobei das Verfahren Folgendes umfasst:
Erfassen von Anbieteridentifizierungsinformationen, die registriert werden, wenn eine Benutzerausrüstung, UE, in ein Netz eintritt, durch einen evolved Node, eNB,
Sammeln (S203) von Statistiken von Ressourcen, die durch UEs besetzt sind, von entsprechenden Anbietern durch den eNB gemäß den Anbieteridentifizierungsinformationen, die registriert werden, wenn die UE in das Netz eintritt, um eine Ressourcenverwaltung auszuführen,
wobei das Ausführen der Ressourcenverwaltung Folgendes umfasst:
nachdem der eNB eine Dienstanfrageinformation empfängt, die durch die UE an einen Anbieter gesendet wird, der registriert wird, wenn die UE eingeschaltet wird, Bestimmen durch den eNB, ob die Anbieteridentifizierungsinformationen, die registriert werden, wenn die UE in das Netz eintritt, mit Anbieteridentifizierungsinformationen übereinstimmen, die registriert werden, wenn die UE eingeschaltet wird,
wenn nicht, Zuweisen einer Netzressource für den Dienst der UE durch den eNB nur unter der Bedingung, dass die Netzressource des Anbieters, der registriert wird, wenn die UE eingeschaltet wird, ausreichend ist,
wobei der Schritt des Erfassens der Anbieteridentifizierungsinformationen, die registriert werden, wenn die UE in das Netz eintritt, durch den eNB Folgendes umfasst:
Einrichten einer Verbindung mit einem Kernnetz durch die UE und Unterrichten (S402) des Kernnetzes über die Anbieteridentifizierungsinformationen, die registriert werden, wenn die UE in das Netz eintritt, durch Non-Access-Stratum(NAS)-Informationen, Übermitteln (S403) der empfangenen Anbieteridentifizierungsinformationen, die registriert werden, wenn die UE in das Netz eintritt, an den eNB durch das Kernnetz.

3. Verfahren nach Anspruch 1, wobei der Schritt des Übermittelns der Anbieteridentifizierungsinformationen, die registriert werden, wenn die UE in das Netz eintritt, an den eNB durch die UE Folgendes umfasst:
Melden der Anbieteridentifizierungsinformationen, die registriert werden, wenn die UE in das Netz eintritt, an den eNB durch die UE mittels einer der folgenden Nachrichten in einem Luftschnittstellen-Signalisierungsprozess: einer Funkressourcensteuerung (RRC - Radio Resource Control), Einrichtungsanfragenachricht und einer RRC-Einrichtungsabschlussnachricht.

4. Verfahren nach Anspruch 2, wobei der Schritt des Übermittelns der empfangenen Anbieteridentifizierungsinformationen, die registriert werden, wenn die UE in das Netz eintritt, an den eNB durch das Kernnetz Folgendes umfasst:
Übermitteln der Anbieteridentifizierungsinformationen, die registriert werden, wenn die UE in das Netz eintritt, an den eNB durch das Kernnetz durch eine Anfangs-UE-Kontextanfragenachricht.

5. System zur Ressourcenverwaltung basierend auf gemeinsamer Funknetznutzung, wobei mehrere Anbieter eine Basisstation gemeinsam nutzen, wobei das System Folgendes umfasst:
eine Benutzerausrüstung, UE, (11) und einen evolved NodeB, eNB, (21), wobei
die UE (11) dafür konfiguriert ist, Anbieteridentifizierungsinformationen, die registriert werden, wenn die UE in das Netz eintritt, an den eNB (21) zu übermitteln,
der eNB (21) dafür konfiguriert ist, die Anbieteridentifizierungsinformationen zu erfassen, die registriert werden, wenn die UE (11) in das Netz eintritt, und Statistiken von Ressourcen, die durch UEs besetzt sind, von entsprechenden Anbietern gemäß den Anbieteridentifizierungsinformationen, die registriert werden, wenn die UE (11) in das Netz eintritt, zu sammeln, um eine Ressourcenverwaltung auszuführen,
wobei der eNB (21) für Folgendes konfiguriert ist:
nachdem der eNB eine Dienstanfrageinformation empfängt, die durch die UE an einen Anbieter gesendet wird, der registriert wird, wenn die UE eingeschaltet wird, Bestimmen, ob die Anbieteridentifizierungsinformationen, die registriert werden, wenn die UE in das Netz eintritt, mit Anbieteridentifizierungsinformationen übereinstimmen, die registriert werden, wenn die UE eingeschaltet wird, wenn nicht, Zuweisen einer Netzressource für den Dienst der UE nur unter der Bedingung, dass die Netzressource des Anbieters, der registriert wird, wenn die UE eingeschaltet wird, ausreichend ist,
wobei die UE (11) dafür konfiguriert ist, die Anbieteridentifizierungsinformationen, die registriert werden, wenn die UE (11) in das Netz eintritt, direkt an den eNB (21) zu melden.

6. System nach Anspruch 5, wobei die UE (11) dafür konfiguriert ist, die Anbieteridentifizierungsinformationen, die registriert werden, wenn die UE (11) in das Netz eintritt, an den eNB (21) mittels einer der folgenden Nachrichten in einem Luftschnittstellen-Signalisierungsprozess zu melden: einer Funkressourcensteuerung (RRC - Radio Resource Control), Einrichtungsanfragenachricht und einer RRC-Einrichtungsabschlussnachricht.

7. System zur Ressourcenverwaltung basierend auf gemeinsamer Funknetznutzung, wobei mehrere Anbieter eine Basisstation gemeinsam nutzen, wobei das System Folgendes umfasst:
eine Benutzerausrüstung, UE, (11) und einen evolved NodeB, eNB, (21), wobei
die UE (11) dafür konfiguriert ist, Anbieteridentifizierungsinformationen, die registriert werden, wenn die UE in das Netz eintritt, an den eNB (21) zu übermitteln,
der eNB (21) dafür konfiguriert ist, die Anbieteridentifizierungsinformationen zu erfassen, die registriert werden, wenn die UE (11) in das Netz eintritt, und Statistiken von Ressourcen, die durch UEs besetzt sind, von entsprechenden Anbietern gemäß den Anbieteridentifizierungsinformationen, die registriert werden, wenn die UE (11) in das Netz eintritt, zu sammeln, um eine Ressourcenverwaltung auszuführen,
wobei der eNB (21) für Folgendes konfiguriert ist:
nachdem der eNB eine Dienstanfrageinformation empfängt, die durch die UE an einen Anbieter gesendet wird, der registriert wird, wenn die UE eingeschaltet wird, Bestimmen, ob die Anbieteridentifizierungsinformationen, die registriert werden, wenn die UE in das Netz eintritt, mit Anbieteridentifizierungsinformationen übereinstimmen, die registriert werden, wenn die UE eingeschaltet wird, wenn nicht, Zuweisen einer Netzressource für den Dienst der UE nur unter der Bedingung, dass die Netzressource des Anbieters, der registriert wird, wenn die UE eingeschaltet wird, ausreichend ist,
wobei das System ferner ein Kernnetz (32) umfasst,
wobei die UE (11, 12) dafür konfiguriert ist, eine Verbindung mit dem Kernnetz (32) einzurichten und das Kernnetz (32) über die Anbieteridentifizierungsinformationen, die registriert werden, wenn die UE (11, 12) in das Netz eintritt, durch Non-Access-Stratum(NAS)-lnformationen zu unterrichten,
wobei das Kernnetz (32) dafür konfiguriert ist, die Anbieteridentifizierungsinformationen, die registriert werden, wenn die UE (11, 12) in das Netz eintritt, an den eNB (21, 22) zu übermitteln.

8. System nach Anspruch 7, wobei das Kernnetz (32) dafür konfiguriert ist, die Anbieteridentifizierungsinformationen, die registriert werden, wenn die UE (11, 12) in das Netz eintritt, durch eine Anfangs-UE-Kontextanfragenachricht ab den eNB (21, 22) zu übermitteln.

9. System nach einem der Ansprüche 5 bis 8, wobei der eNB (21, 22) ferner ein Statistikmodul (211, 221) und ein Verarbeitungsmodul (212, 222) umfasst, wobei:
das Statistikmodul (211, 212) dafür konfiguriert ist, Statistiken von Ressourcen, die durch UEs besetzt sind, von entsprechenden Anbietern gemäß den Anbieteridentifizierungsinformationen, die registriert werden, wenn die UE in das Netz eintritt, zu sammeln und die statistischen Ergebnisse periodisch zu übermitteln, und
das Verarbeitungsmodul (212, 222) dafür konfiguriert ist, eine Ressourcenverwaltung gemäß den statistischen Ergebnissen auszuführen.

## Revendications

1. Procédé de gestion de ressources sur la base d'un partage de réseau radio, dans lequel de multiples fournisseurs partagent une station de base, dans lequel le procédé comprend les étapes ci-dessous consistant à :
acquérir, par le biais d'une station « NodeB » évoluée, eNB, des informations d'identification de fournisseur enregistrées lorsqu'un équipement d'utilisateur, UE, entre dans un réseau ;
collecter (S203), par le biais de la station eNB, des statistiques sur des ressources occupées par des équipements UE de fournisseurs respectifs selon les informations d'identification de fournisseur enregistrées lorsque l'équipement UE entre dans le réseau, en vue de mettre en œuvre une gestion de ressources ;
dans lequel l'étape de mise en oeuvre de la gestion de ressources comprend les étapes ci-dessous consistant à :
suite à la réception, par la station eNB, d'informations de demande de service envoyées par l'équipement UE à un fournisseur enregistré lorsque l'équipement UE est sous tension, déterminer, par le biais de la station eNB, si les informations d'identification de fournisseur enregistrées lorsque l'équipement UE entre dans le réseau correspondent à des informations d'identification de fournisseur enregistrées lorsque l'équipement UE est sous tension ;
dans la négative, attribuer, par le biais de la station eNB, une ressource de réseau pour le service de l'équipement UE, uniquement à condition que la ressource de réseau du fournisseur enregistré lorsque l'équipement UE est sous tension soit suffisante ;
dans lequel l'étape d'acquisition, par le biais de la station eNB, des informations d'identification de fournisseur enregistrées lorsque l'équipement UE entre dans le réseau, comprend l'étape ci-dessous consistant à :
transmettre (S202), par le biais de l'équipement UE, les informations d'identification de fournisseur enregistrées lorsque l'équipement UE entre dans le réseau, à la station eNB.

2. Procédé de gestion de ressources sur la base d'un partage de réseau radio, dans lequel de multiples fournisseurs partagent une station de base, dans lequel le procédé comprend les étapes ci-dessous consistant à :
acquérir, par le biais d'une station « NodeB » évoluée, eNB, des informations d'identification de fournisseur enregistrées lorsqu'un équipement d'utilisateur, UE, entre dans un réseau ;
collecter (S203), par le biais de la station eNB, des statistiques sur des ressources occupées par des équipements UE de fournisseurs respectifs selon les informations d'identification de fournisseur enregistrées lorsque l'équipement UE entre dans le réseau, en vue de mettre en œuvre une gestion de ressources ;
dans lequel l'étape de mise en oeuvre de la gestion de ressources comprend les étapes ci-dessous consistant à :
suite à la réception, par la station eNB, d'informations de demande de service envoyées par l'équipement UE à un fournisseur enregistré lorsque l'équipement UE est sous tension, déterminer, par le biais de la station eNB, si les informations d'identification de fournisseur enregistrées lorsque l'équipement UE entre dans le réseau correspondent à des informations d'identification de fournisseur enregistrées lorsque l'équipement UE est sous tension ;
dans la négative, attribuer, par le biais de la station eNB, une ressource de réseau pour le service de l'équipement UE, uniquement à condition que la ressource de réseau du fournisseur enregistré lorsque l'équipement UE est sous tension soit suffisante ;
dans lequel l'étape d'acquisition, par le biais de la station eNB, des informations d'identification de fournisseur enregistrées lorsque l'équipement UE entre dans le réseau, comprend les étapes ci-dessous consistant à :
établir, par le biais de l'équipement UE, une connexion avec un réseau central, et notifier (S402), au réseau central, les informations d'identification de fournisseur enregistrées lorsque l'équipement UE entre dans le réseau, par l'intermédiaire d'informations de strate de non-accès, NAS ; et
transmettre (S403), par le biais du réseau central, les informations d'identification de fournisseur reçues enregistrées lorsque l'équipement UE entre dans le réseau, à la station eNB.

3. Procédé selon la revendication 1, dans lequel l'étape de transmission, par l'équipement UE, des informations d'identification de fournisseur enregistrées lorsque l'équipement UE entre dans le réseau, à la station eNB, comprend l'étape ci-dessous consistant à :
rendre compte, par le biais de l'équipement UE, des informations d'identification de fournisseur enregistrées lorsque l'équipement UE entre dans le réseau, à la station eNB, par l'intermédiaire de l'un des messages suivants, dans le cadre d'un processus de signalisation par interface hertzienne : un message de demande d'établissement de gestion de ressources radio, RRC, et un message d'achèvement d'établissement de gestion RRC.

4. Procédé selon la revendication 2, dans lequel l'étape de transmission, par le réseau central, des informations d'identification de fournisseur reçues enregistrées lorsque l'équipement UE entre dans le réseau, à la station eNB, comprend l'étape ci-dessous consistant à :
transmettre, par le réseau central, les informations d'identification de fournisseur enregistrées lorsque l'équipement UE entre dans le réseau, à la station eNB, par l'intermédiaire d'un message de demande de contexte d'équipement UE initial.

5. Système de gestion de ressources sur la base d'un partage de réseau radio, dans lequel de multiples fournisseurs partagent une station de base, dans lequel le système comprend : un équipement d'utilisateur, UE, (11), et une station « NodeB » évoluée, eNB, (21), dans lequel :
l'équipement UE (11) est configuré de manière à transmettre des informations d'identification de fournisseur enregistrées lorsque l'équipement UE entre dans un réseau, à la station eNB (21) ;
la station eNB (21) est configurée de manière à acquérir les informations d'identification de fournisseur enregistrées lorsque l'équipement UE (11) entre dans le réseau, et à collecter des statistiques sur des ressources occupées par des équipements UE de fournisseurs respectifs selon les informations d'identification de fournisseur enregistrées lorsque l'équipement UE (11) entre dans le réseau, de manière à mettre en œuvre une gestion de ressources ;
dans lequel la station eNB (21) est configurée de manière à : suite à la réception, par la station eNB, d'informations de demande de service envoyées par l'équipement UE à un fournisseur enregistré lorsque l'équipement UE est sous tension, déterminer si les informations d'identification de fournisseur enregistrées lorsque l'équipement UE entre dans le réseau correspondent à des informations d'identification de fournisseur enregistrées lorsque l'équipement UE est sous tension ; dans la négative, attribuer une ressource de réseau pour le service de l'équipement UE, uniquement à condition que la ressource de réseau du fournisseur enregistré lorsque l'équipement UE est sous tension soit suffisante ;
dans lequel l'équipement UE (11) est configuré de manière à rendre compte des informations d'identification de fournisseur enregistrées lorsque l'équipement UE (11) entre dans le réseau, à la station eNB (21), directement.

6. Système selon la revendication 5, dans lequel l'équipement UE (11) est configuré de manière à rendre compte des informations d'identification de fournisseur enregistrées lorsque l'équipement UE (11) entre dans le réseau, à la station eNB (21), par l'intermédiaire de l'un des messages suivants dans le cadre d'un processus de signalisation par interface hertzienne : un message de demande d'établissement de gestion de ressources radio, RRC, et un message d'achèvement d'établissement de gestion RRC.

7. Système de gestion de ressources sur la base d'un partage de réseau radio, dans lequel de multiples fournisseurs partagent une station de base, dans lequel le système comprend : un équipement d'utilisateur, UE, (11), et une station « NodeB » évoluée, eNB, (21), dans lequel :
l'équipement UE (11) est configuré de manière à transmettre des informations d'identification de fournisseur enregistrées lorsque l'équipement UE entre dans un réseau, à la station eNB (21) ;
la station eNB (21) est configurée de manière à acquérir les informations d'identification de fournisseur enregistrées lorsque l'équipement UE (11) entre dans le réseau, et à collecter des statistiques sur des ressources occupées par des équipements UE de fournisseurs respectifs selon les informations d'identification de fournisseur enregistrées lorsque l'équipement UE (11) entre dans le réseau, de manière à mettre en œuvre une gestion de ressources ;
dans lequel la station eNB (21) est configurée de manière à : suite à la réception, par la station eNB, d'informations de demande de service envoyées par l'équipement UE à un fournisseur enregistré lorsque l'équipement UE est sous tension, déterminer si les informations d'identification de fournisseur enregistrées lorsque l'équipement UE entre dans le réseau correspondent à des informations d'identification de fournisseur enregistrées lorsque l'équipement UE est sous tension ; dans la négative, attribuer une ressource de réseau pour le service de l'équipement UE, uniquement à condition que la ressource de réseau du fournisseur enregistré lorsque l'équipement UE est sous tension soit suffisante ;
dans lequel le système comprend en outre un réseau central (32) ;
l'équipement UE (11, 12) est configuré de manière à établir une connexion avec le réseau central (32) et à notifier, au réseau central (32), les informations d'identification de fournisseur enregistrées lorsque l'équipement UE (11, 12) entre dans le réseau, par l'intermédiaire d'informations de strate de non-accès, NAS ;
le réseau central (32) est configuré de manière à transmettre les informations d'identification de fournisseur enregistrées lorsque l'équipement UE (11, 12) entre dans le réseau, à la station eNB (21, 22).

8. Système selon la revendication 7, dans lequel le réseau central (32) est configuré de manière à transmettre les informations d'identification de fournisseur enregistrées lorsque l'équipement UE (11, 12) entre dans le réseau, à la station eNB (21, 22), par l'intermédiaire d'un message de demande de contexte d'équipement UE initial.

9. Système selon l'une quelconque des revendications 5 à 8, dans lequel la station eNB (21, 22) comprend en outre un module de statistiques (211, 221) et un module de traitement (212, 222), dans lequel
le module de statistiques (211, 221) est configuré de manière à collecter des statistiques sur des ressources occupées par des équipements UE de fournisseurs respectifs, selon les informations d'identification de fournisseur enregistrées lorsque l'équipement UE entre dans le réseau, et à transmettre les résultats de statistiques, périodiquement ; et
le module de traitement (212, 222) est configuré de manière à mettre en œuvre une gestion de ressources selon les résultats de statistiques.
